# EUROPÄISCHE PATENTSCHRIFT

(11) **EP 1 665 501 B1**
(45) Veröffentlichungstag und Bekanntmachung des Hinweises auf die Patenterteilung: **26.12.2012**
(21) Anmeldenummer: 04763369.8
(22) Anmeldetag: 21.07.2004
(51) Int. Cl.: H02K 5/22

(54) **Elektromotor**
Electric motor
Moteur électrique

(30) Priorität: 02.09.2003 DE 10340785; 05.06.2004 DE 102004027653
(43) Veröffentlichungstag der Anmeldung: 07.06.2006
(73) Patentinhaber: SEW-Eurodrive GmbH & Co, 76646 Bruchsal (DE)
(72) Erfinder: TESCH, Sven, 76698 Ubstadt-Weiher (DE); SCHÜLER, Gerd, 56291 Badenhard (DE)
(86) Internationale Anmeldenummer: PCT/EP2004/008128
(87) Internationale Veröffentlichungsnummer: WO 2005/029681

(56) Entgegenhaltungen:
- EP-A- 0 056 756
- EP-A- 1 164 687
- EP-A- 1 237 260
- EP-A- 1 246 345
- EP-A- 1 278 288
- DE-A- 3 426 973
- DE-A- 10 130 118
- DE-U- 9 315 914
- US-B1- 6 194 849
- US-B1- 6 404 095

## Beschreibung

Die Erfindung betrifft einen Elektromotor nach dem Oberbegriff des Anspruch 1. Ein solcher Motor Ist aus der EP 1 278 288 A2 bekannt.

Solche Elektromotoren umfassen zumindest einen Stator und einen Rotor. Der Stator umfasst ein Stator-Blechpaket, in dessen Wicklungsnuten Statorwicklungen eingelegt sind. Üblicherweise wird als Wickeldraht ein Lackdraht verwendet, der aus einer Kupferader und einem, diese umgebenden Lack besteht. Das Drahtende wird nach dem Wickeln mit einer Litze elektrisch leitfähig verbunden. Auf das andere Ende der Lilze wird eine Adernhülse oder Ringkabelschuh aufgequetscht und diese mit dem Klemmenbrett im Klemmenkasten, also Anschlusskasten, elektrisch leitfähig, lösbar verbunden. Dabei wird die Adernhülse oder Ringkabelschuh mit einer auf einem Bolzen sitzenden Mutter an eine Metallplatte gedrückt. Das Klemmenbrett ist lösbar verbunden mit dem Statorgehäuse.

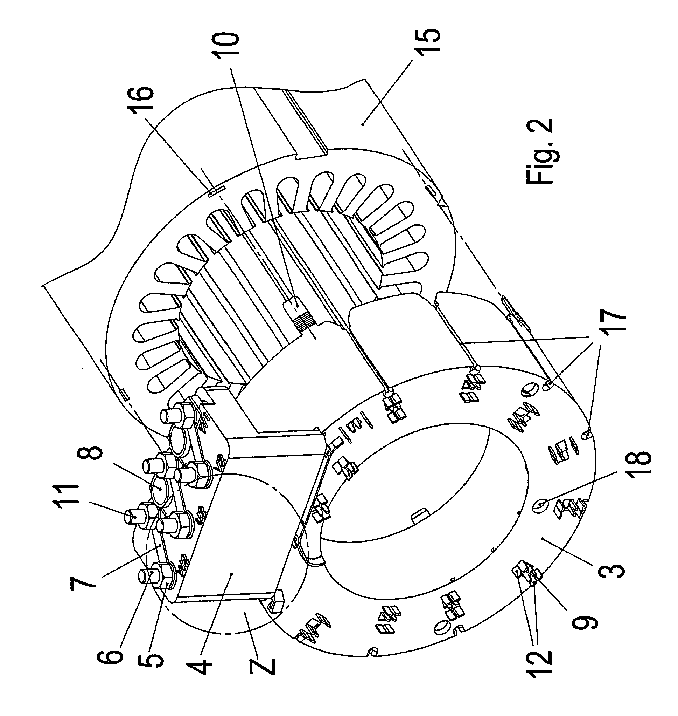

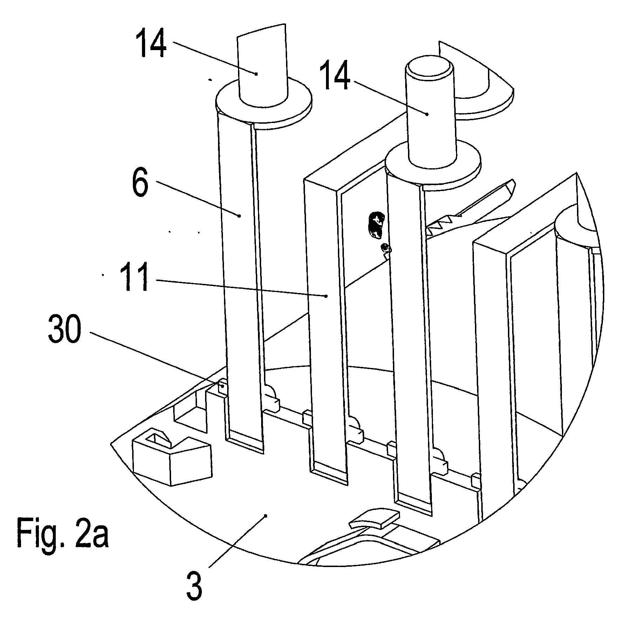

Aus der DE 198 51 060 A1 ist ein Elektromotorischer Antrieb bekannt, bei dem ein Stanzgitter oder eine Platine 19 verwendet ist. Das Stanzgitter oder die Platine 19 sind mit zusätzlich notwendigen Schrauben oder dergleichen anschraubbar an das Gehäuse (Spalte 4, Zeile 56). Die Stator-Wicklungsdrähte werden mit dem Stanzgitter oder der Platine 19 verschwelßt oder verlötet. Nachteiligerweise ist aber keine Zugentlastung vorhanden und das Stanzgitter oder die Platine 19 werden zur Schwingungsdämpfung verwendet. Ein erheblicher Nachteil ist auch, dass das Stanzgilter oder die Platine 19 zur Drehmomentübertragung verwendet ist (Spalte 4, Zeilen 43 bis 51). Dies hat den weiteren Nachteil zur Folge, dass das Stanzgitter oder die Platine nur bei kleinen Motoren verwendbar ist. Bei industrieüblichen Motoren, insbesondere im Bereich von mehreren Hundert Watt oder einigen kW würde das Stanzgitter oder die Platine bei Montage oder nach kurzer Betriebszeit zerstört sein. Weiter nachteilig ist, dass gemäß der Figur 2 (rechts unten) ein Kontaktstift als Anschlussvorrichlung für einen weiblichen Steckverbinder mit dem Stanzblech zu verbinden ist.

Das Anschließen der Versorgungsleitungen muss über eine Steckverbindung außerhalb des Statorgehäuses, insbesondere in der Umgebung, erfolgen und muss daher besonders geschützt ausgeführt werden, was aufwendig und kostspielig ist.

Aus der US 6 194 849 B1 ist eine Leiterplatte zur Statorkontaktierung bekannt, die keine hohen Ströme gewährleisten kann.

EP 1 278 288 ist eine ringförmige Verbindungsplatte bekannt, auf der Leite

Aus der DE 101 30118 A1 Ist eine Relaisträgervorrichtung bekannt.

Aus der EP 0 056 756 A1 ist ein Elektromotor mit einem unbeweglichen Teil (dortiges Bezugszeichen 20) bekannt.

Der Erfindung liegt daher die Aufgabe zugrunde, einen industrieüblichen Motor derart weiterzubilden, dass er insgesamt kostengünstiger wird, insbesondere unter Einbeziehung aller Herstellkosten bei Massenfertigung.

Erfindungsgemäß wird die Aufgabe bei dem Elektromotor nach den in Anspruch 1 angegebenen Merkmalen gelöst.

Wesentliche Merkmale der Erfindung bei dem Elektromotor sind, dass er zumindest einen Stator und einen Rotor umfasst,
wobei der Stator zumindest ein Statorgehäuse ein Stator-Blechpaket und Statorwicklungen umfasst,
wobei ein Klemmenbrett vorgesehen ist, auf dem Kontakte umfassende Anschlussvorrichtungen vorgesehen sind,
wobei die Enden der Stalorwicklungsdrähte mit einem ersten Stanz-Gitter oder Stanz-Biege-Gitter elektrisch leitend verbunden sind,
wobei Zur Herstellung einer elektrischen Verbindung das Klemmenbrett mittels der Kontakte an deren ersten Ende Kraftschlüssig und lösbar verbindbar ist mit Kontaktbereichen des ersten Gitters, insbesondere Zungen,
wobei die Kontakte an ihrem zweiten

Ende zum Verbinden mit Versorgungsleitungen ausgebildet sind,
wobei das erste Gitter zur Bildung einer Kappe mit kanststoff umspritzt ist, die mit dem Stator-Blechpaket zur Fixierung lösbar verbunden ist und dort Ihren Halt findet.

Erfindungsgemäß ist vorgesehen, dass das Klemmenbrett die Kontakte umfasst, welche kunststoffumspritzt sind zur Bildung des Klemmenbretts, und am zweiten Ende der Kontakte eine jeweilige Klemmverbindung vorgesehen ist,
wobei die Kontakte aus einem zweiten Stanz-Biege-Gitter hergestellt sind, und
wobei das zweite Gitter derart ausgeführt und umspritzt ist, dass die Betriebsart des Elektromotors, wie Stern-Schaltung oder Dreieckschaltung festgelegt ist.

Von Vorteil ist dabei, dass beim Herstellen das zeitaufwendige, manuell auszuführende und kostspielige Verbinden der Wicklungsdrähte mit Litze und deren Verbindung mit dem Klemmenbrett entfällt. Vorteiligerweise ist ein Gitter vorhanden, welches derart ausformbar ist, dass die Enden der Wicklungsdrähte schnell und kostengünstig mit dem Gitter verbindbar sind, beispielsweise durch Schweißen. Das Verbinden des Gitters mit dem Klemmenbrett ist beispielsweise durch Aufstecken besonders schnell, kostengünstig und einfach möglich.

Weiter vorteilig ist, dass das Klemmenbrett nicht nur die Funktion einer elektrischen Anschlussvorrichtung aufweist sondern auch die Betriebsart des Elektromotors, beispielsweise Sternschaltung oder Dreieckschaltung mittels des Klemmenbretts festlegbar ist.

Darüber hinaus ist von Vorteil, dass das Klemmenbrett Kontakte aufweist, die an ihrem einen Ende verbindbar sind mit den Zungen des Gitters und an ihrem anderen Ende eine Möglichkeit zur elektrischen Verbindung von Versorgungsleitungen aufweisen. Dies steht ganz im Gegensatz zum Stand der Technik, bei dem Klemmenbretter nur aus in Kunststoff vergossene Gewinde-Bolzen bestehen, an denen Kabelschuhösen oder Drahtende mittels einer Mutter miteinander verklemmt werden zur Herstellung einer elektrischen Verbindung. Bei der Erfindung hingegen ist die Verbindung zu den Zungen des Gitters hin eine zumindest kraftschlüssige lösbare Verbindung, zu den Versorgungskabeln hin wiederum eine Klemmverbindung mit Mutter. Der Aufwand für das Herstellen der Anschlüsse der StatorWicklungen ist also nur noch ein Aufstecken des Klemmenbrettes auf die Zungen des Gitters und somit viel kleiner und kostengünstiger. Wesentliches Merkmal und wesentlicher Vorteil bei der Erfindung liegt also nicht nur im erwähnten Gitter sonder auch vor allem in der Ausbildung des Klemmenbrettes mit seinen Kontakten.

Wesentlicher weiterer Vorteil ist, dass das erste Ende der Kontakte innerhalb des Statorgehäuses vorsehbar ist und das zweite Ende der Kontakte außerhalb des Statorgehäuses vorsehbar ist. Insbesondere im Klemmenkasten, also Anschlusskasten, oder in der Umgebung. Somit ist eine Durchleitung von innen nach außen erzielt, die durch bloßes Steckverbinden erreichbar ist. Innerhalb des Statorgehäuses ist also kein elektrisches Verbinden mit einem Litzenkabel oder einem anderen Kabel notwendig. Außerdem ist die Steckverbindung zwischen den Zungen des Gitters und den Kontakten innerhalb des Statorgehäuses und somit geschützt vor Chemikalien oder anderen Umweltstoffen. Eine Steckverbindung hingegen außerhalb des Statorgehäuses, insbesondere in der Umgebung, ist besonders geschützt auszuführen, also aufwendig und kostspielig.

Die bei der Erfindung vorhandene genannte Steckverbindung ist daher nicht nur kostengünstig sondern sogar mit den im Klemmenbrett integrierten Kontakten ausführbar. Auf diese Weise umfasst das Klemmenbrett mehrere Funktionen und bewirkt insgesamt eine Reduktion des Aufwandes und somit auch der Kosten beim Herstellen. Warten und Reparieren des Elektromotors.

Wesentlicher weiterer Vorteil ist auch, dass der umspritzte Kunststoff beim Klemmenbrett und bei der Kappe derart elektrisch isolierend ausführbar ist, dass Isolier-Schutzhüllen um metallische Teile herum nicht notwendig sind.

Insbesondere ist das Gitter in eine Kappe eingespritzt, die mit dem Statorblechpaket zur Fixierung lösbar verbindbar ist. Von Vorteil ist dabei, dass das Gitter mittels der Kappe fixierbar ist und stabil eingelagert ist. Somit ist auf das Gitter das Klemmenbrett aufsteckbar. Außerdem ist die Verdrahtung zwischen Klemmenbrett und den verschiedenen Wicklungsdrähten im Gitter enthalten.

Bei einer vorteilhaften Ausgestaltung sind an der Kappe Führungskanäle und Halterungen für die Wicklungsdrähte ausgeformt. Von Vorteil ist dabei, dass die Wicklungsdrähte schnell und einfach festiegbar und fixierbar an dem gewünschten Ort sind.

Bei einer vorteilhaften Ausgestaltung sind die Wicklungsdrähte mit Kontaktbereichen des Gitters verschweißt. Von Vorteil ist dabei, dass eine belastungsfähige Verbindung schnell und kostengünstig vorsehbar ist.

Bei einer vorteilhaften Ausgestaltung sind die Wicklungsdrähte mit Kontaktbereichen des Gitters mittels Thermokompressionsschweißung oder Nebenschlussverschweißung verschweißt. Von Vorteil Ist dabei, dass Industrieübliche Werkzeuge verwendbar und kostengünstige Verbindungen ausführbar sind.

Bei einer vorteilhaften Ausgestaltung ist das Gitter derart gestanzt und geformt, dass Schweißhaken für die Nebenschlussverschweißung, wie beispielsweise Hakenschweißverfahren oder dergleichen, mit den Wicklungsdrähten ausgebildet sind. Von Vorteil ist dabei, dass eine besonders belastungsfähige Verbindung entsteht.

Bei einer vorteilhaften Ausgestaltung sind das Klemmenbrett mittels Aufstecken der Kontakte auf die Zungen des Gitters elektrisch verbindbar, insbesondere mittels an deren Enden angebrachten Federkontakten. Von Vorteil ist dabei, dass die Verbindung schnell, einfach und kostengünstig realisierbar ist.

Bei einer vorteilhaften Ausgestaltung sind die Kontakte an ihrem ersten Ende zumindest kraftschlüssig und lösbar verbindbar mit Kontaktbereichen des Gitters, Insbesondere Zungen, und an ihrem zweiten Ende als Anschlussvorrichtungen zum Verbinden mit Versorgungsleitungen ausgebildet. Von Vorteil ist dabei, dass kein spezielles Verbindungskabel notwendig ist zum Verbinden der Kontaktbereiche des Gitters mit den Versorgungsleitungen sondern dass die Kontakte zum Herstellen einer Steckverbindung zu den Zungen des Gitters hin geeignet ausführbar sind. Somit sind nur noch die Versorgungsleitungen anzuklemmen. Dabei ist wesentlicher Vorteil, dass mittels der in dem Klemmenbrett verlaufenden Kontakte die Durchleitung der elektrischen Ströme vom inneren Bereich des Statorgehäuses zum Klemmenkasten hindurch, also zum äußeren Bereich hin erfolgt und zwar in einer geschützten Weise. Beim Stand der Technik musste ein Kabel, beispielsweise Litzenkabel, gelegt werden vom inneren Bereich zum äußeren Bereich. Dies musste also durch Öffnungen im Statorgehäuse hindurchgeschleift werden, was aufwendig, kostspielig war und Gefährdungen für dieses Kabel umfasst hatte.

**Insbesondere sind bei der Erfindung** die Kontakte aus einem zweiten Gitter, wie Stanz-Gitter oder Stanz-Biege-Gitter, herstellbar. Von Vorteil ist dabei, dass die Kosten und der Aufwand beim Herstellen stark verringerbar sind.

**Insbesondere** sind das Klemmenbrett zumindest die Kontakte umfasst, welche kunststoffumspritzt, und am zweiten Ende der Kontakte eine jeweilige Klemmverbindung. Von Vorteil ist dabei, dass der umspritzte Kunststoff nicht nur elektrische Isolierfunktion sondern auch mechanische Halte- und Schutzfunktion für die Kontakte aufweist. Durch die Verwendung von Klemmschrauben zum Anklemmen der Versorgungskabel sind Gewindebolzen entbehrlich.

Insbesondere ist das zweite Gitter derart ausgeführt, dass die Betriebsart des Elektromotors, wie Stern-Schaltung oder Dreieckschaltung, festgelegt ist.

**Bei einer vorteilhaften Ausgestaltung** ist der umspritzte Kunststoff an seiner Oberfläche derart ausgeprägt, dass Mittel zur Kennzeichnung der Betriebsart umfasst sind, wie ein Symbol, Piktogramm oder dergleichen. Von Vorteil ist dabei, dass an jedem Klemmenbrett die Betriebsart des Motors klar erkennbar ist und in dem Klemmenbrett integriert ist.

Weitere Vorteile ergeben sich aus den Unteransprüchen.

### Bezugszeichenliste

- 1: Statorgehäuse
- 2: Anschlussraum
- 3: Kappe
- 4: Klemmenplatte
- 5: Mutter
- 6: Kontakt, kurz
- 7: Klemmenbrücke
- 8: Durchgangsbohrung
- 9: Schweißhaken
- 10: Rastnase
- 11: Kontakt, lang
- 12: Halterung
- 13: Befestigungsschraube
- 14: Gewindebolzen
- 15: Blechpaket für Statorwicklungen
- 16: Aussparung
- 17: Führungskanal
- 18: Aussparung
- 30: Zungen
- 40: Stanz-Biege-Gitter
- 41: Verstärkungsrippen
- 70: Anschlussscheibe
- 80: Federkontakt
- 120: Stanz-Gitter
- 121: Kontaktfläche
- 130: Kappe
- 131: Verstärkungsrippen
- 140: Klemmenbreit
- 141: Klemmenschrauben
- 142: Mittel zur Kennzeichnung der Dreieckschaltung
- 143: Mittel zur Kennzeichnung der Sternschaltung
- 144: Klemmenbrett
- 150: zweites Gitter vor dem Stanzen
- 151: zweites Gitter nach dem Stanzen
- 152: Kontakte

Die Erfindung wird nun anhand von Abbildungen näher erläutert:
In der Figur 1 ist das Statorgehäuse 1 des erfindungsgemäßen Motors gezeigt.
In Figur 2 ist der erfindungsgemäße Motorbereich ohne Statorgehäuse dargestellt.
In Figur 2a ist ein Ausschnitt aus dem Bereich einer Klemmenplatte 4 nach Figur 2 gezeigt
In Figur 3 ist eine erfindungsgemäße die Kappe 3 gezeigt.
In Figur 3a ist ein vergrößerter Ausschnitt gezeigt.
In Figur 4 ist die erfindungsgemäße Kappe 3 von hinten gezeigt.
In Figur 5 ist eine Klemmenplatte 4 gezeigt, wobei die Figur 5 nur zur Erläuterung des technischen Hintergrundes der Erfindung dient.
Figur 6 zeigt die Klemmenplatte 4 gemäß Figur 5 in einer Schrägansicht von unten wobei die Figur 6 nur zur Erläuterung des technischen Hintergrundes der Erfindung dient.
Figur 7 zeigt eine Schrägansicht der Klemmenplatte gemäß Figur 5 , wobei ein Ausschnitt in Figur 7a vergrößert gezeigt ist, wobei die Figur 7 und die Figur 7a nur zur Erläuterung des technischen Hintergrundes der Erfindung dienen.

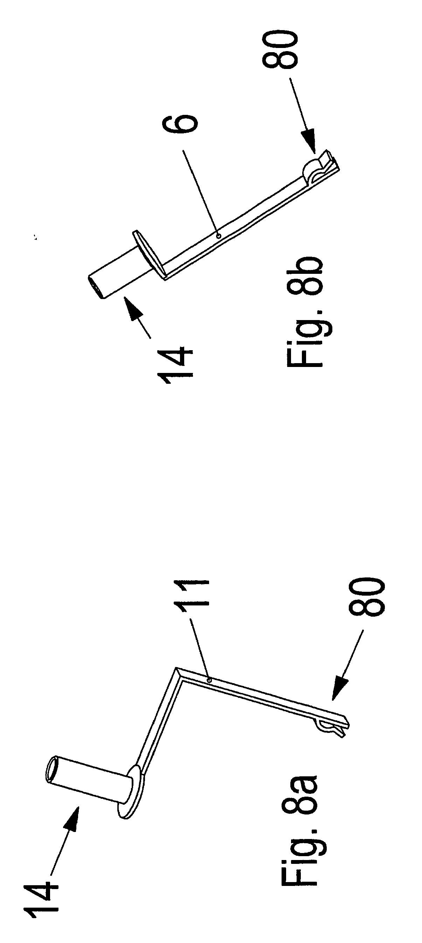

Figur 8a zeigt einen langen Kontakt 11, wobei die Figur 8a nur zur Erläuterung des technischen Hintergrundes der Erfindung dient.
Figur 8b zeigt einen kurzen Kontakt 11, wobei die Figur 8b nur zur Erläuterung des technischen Hintergrundes der Erfindung dient.
Figur 9 zeigt eine Draufsicht auf die Klemrnenplatte 4 gemäß Figur 5 in einer ersten Verschaltung, wobei die Figur 9 nur zur Erläuterung des technischen Hintergrundes der Erfindung dient.
Figur 10 zeigt eine Draufsicht auf die Klemmenplatte 4 gemäß Figur 5 in einer zweiten Verschaltung, wobei die Figur 10 nur zur Erläuterung des technischen Hintergrundes der Erfindung dient.
In Figur 11a ist eine Draufsicht auf das Stanz-Biege-Gitter 40 gezeigt, in Figur 11b eine zugehörige Isometrische Ansicht und in Figur 11c ein vergrößerter Ausschnitt.
Figur 12 zeigt eine Draufsicht nach Figur 12 a und eine zugehörige Isometrische Ansicht nach Figur 12 b.
Figur 13a zeigt eine Kappe 130, die nun das Stanz-Gitter 120 umspritzt umfasst, In Schrägansicht. In Figur 13b ist ein vergrößerter Ausschnitt gezeigt. In Figur 13c ist die Kappe 130 auf einer anderen Blickrichtung gezeigt.
Die Figuren 14a und 14b zeigen jeweils eine erfindungsgemäße Klemmenplatte; die Figuren 15a und 15b zeigen jeweils das zugehörige Stanz-Gitter oder Stanz-Biege-Gitter.

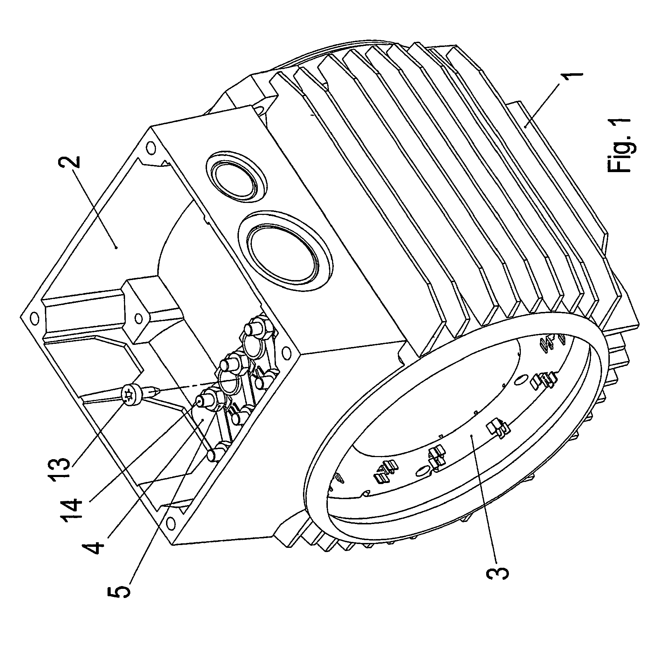

In der Figur 1 ist das Statorgehäuse 1 des erfindungsgemäßen Motors gezeigt. Dabei ist ein einem Klemmenkasten ähnlicher Anschlussraum 2 beim Statorgehäuse 1 einstückig ausgeführt. Im Anschlussraum 2 ist ein Klemmenbrett, also eine Klemmenplatte 4, mit dem Statorgehäuse 1 lösbar verbunden. Dazu weist die Klemmenplatte 4 eine Durchgangsbohrung 8 für die Befestigungsschraube 13 auf, die in einer Gewindebohrung des Statorgehäuses einschraubbar ist.

Au das Statorwicklungspaket ist eine Kappe 3 als Wicklungsanschlusskappe aufgesetzt, die ein Stanz-Biege-Gitter 40 umfasst. In Figur 2 ist das Statorgehäuse weggenommen dargestellt. Dabei ist das Blechpaket 15 für Statorwicklungen gezeigt, in dessen Nuten Statorwicklungen vorsehbar sind. Außerdem weist das Blechpaket Aussparungen 16 auf, die zum Einsetzen von Rastnasen 10 der Kappe 3 geeignet sind. Somit ist die Kappe am Blechpaket 15 lösbar verbunden und findet dort ihren Halt. Außerdem ist die Orientierung der Kappe 3 durch die Anordnung der Rastnasen und der Aussparungen 16 vorgegeben, weil diese hierfür am Umfang unsymmetrisch, also in verschiedenen Winkelabständen zu ihrem jeweils nächsten Nachbarn, angeordnet sind. Beim Aufsetzen der Kappe 3 werden die in den Figuren nicht gezeigten Wicklungen überdeckt und geschützt.

Vorteiligerweise wird als Wicklungsdraht ein Backlackdraht verwendet. Bei diesem ist die innere Kupferader von einem Lack zur Isolation umgeben und dieser Lack Ist von einem Kunststoff umgeben, der zum Verbacken des Wicklungspaketes geeignet ist. Zum Verbacken wird der Stator nach Fertigstellung derart bestromt. dass die Temperatur den Kunststoff verflüssigt. Nach Beendigung des beispielsweise ungefähr eine Minute dauernden Bestromungsvorgangs verfestigt sich der Kunststoff wieder und die Wicklung ist verbacken, also verfestigt. Somit treten keine Verschiebungen oder Brüche beim Betreiben des Motors auf und durch Vibrationen ausgelöste Reibungsvorgänge zwischen den Drähten werden vermieden.

Die Enden der Wicklungsdrähte werden durch Führungskanäle 17 aus dem Wicklungsbereich zu einem Stanz-Biege-Gitter 40 geführt. Dort wird der jeweilige Wicklungsdraht zwischen zwei Halterungen 12 derart eingefädelt, dass der Draht in einer Vertiefung eines Schweißhakens 9 liegt. Mit einem Werkzeug werden dann die beiden Haken des Schweißhakens 9 zusammengepresst und erhitzt, so dass Lack und/oder Kunststoffe des Drahtes an der Schweißstelle entfernt sind und eine elektrisch leitfähige Schweißverbindung zwischen Draht und Stanz-Biege-Gitter 40 entsteht.

Durch die Aussparung 18 ist nach Aufschieben der Kappe 3 auf die Statorwicklungen ein Sensor, beispielsweise ein Temperaturfühler oder dergleichen, einführbar und in Kontakt bringbar mit den Statorwicklungen.

In Figur 2a ist ein Ausschnitt aus dem Bereich der Klemmenplatte 4 in Figur 2 gezeigt, wobei das Grundmaterial der Klemmenplatte selbst ausgeblendet ist. Auf diese Weise sind die in der Klemmenplatte 4 liegenden Kontakte, also lange Kontakte 11 und kurze Kontakte 6, sichtbar. Diese Kontakte umfassen ein Stanz-Biegeteil und sind mit den sich an ihren Füßen befindenden Federkontakten auf Zungen 30 des Stanz-Biege-Gitters 40 aufsteckbar. An ihrem anderen Ende umfassen diese Kontakte fest verbundene Gewindebolzen 14, auf die Muttern 5 aufschraubbar sind, mit denen Klemmenbrücken 7 befestigbar sind.

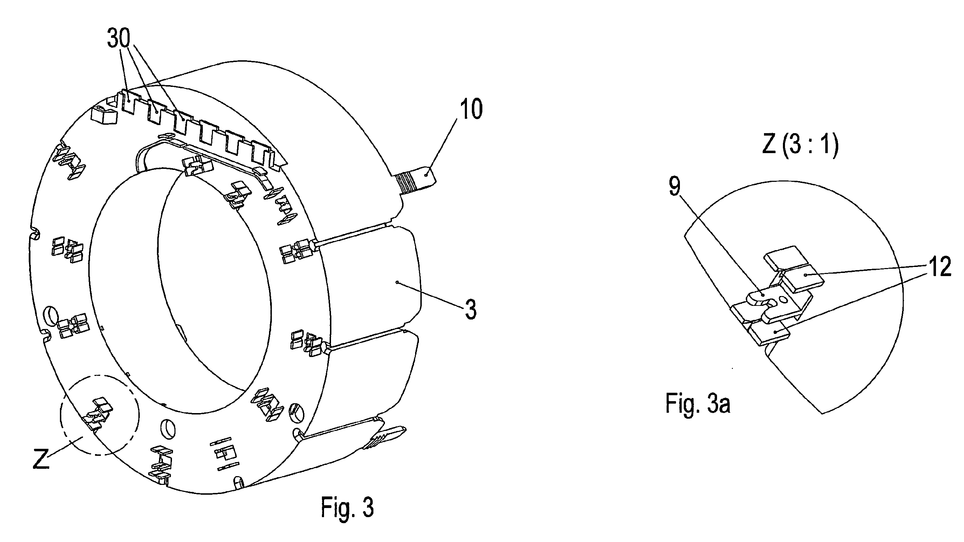

In Figur 3 ist die Kappe 3 gezeigt. Die Kappe 3 umfasst das Stanz-Biege-Gitter 40, welches umspritzt ist mit Kunststoff. Kontaktbereiche des Stanz-Biege-Gitters 40 sind sichtbar.

Die Halterungen 12 sind einstückig mit der Kappe 3 ausgeformt, insbesondere mittels Spritzguss. Die Schweißhaken 9 sind ebenso wie die Zungen 30 Ausformungen des Stanz-Biege-Gitters.

In Figur 3a ist ein vergrößerter Ausschnitt gezeigt, bei dem die Halterungen 12 und der Schweißhaken 9 sowie deren Ausformung deutlich zu sehen ist.

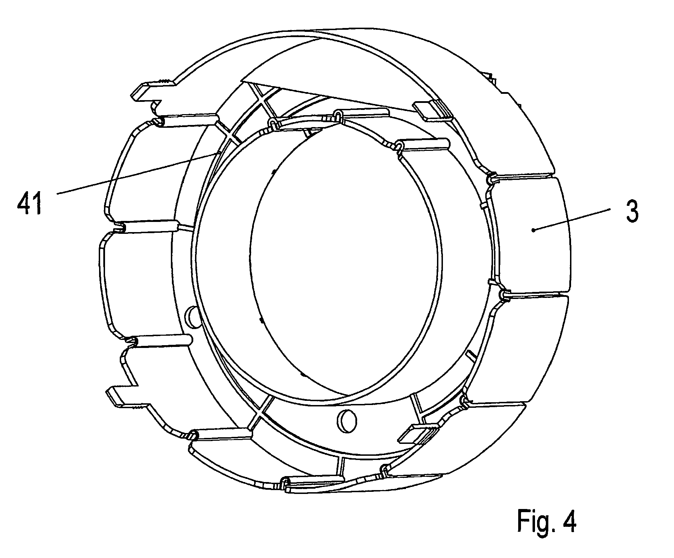

In Figur 4 ist die Kappe von hinten gezeigt, wobei die das Stanz-Biege-Gitter 40 umgebenden Verstärkungsrippen 41 deutlich zu sehen sind. Einerseits verstärken sie die Kappe und andererseits dienen sie zum Einhalten des Spannungsabstandes, also Abstandes zu den Wicklungen.

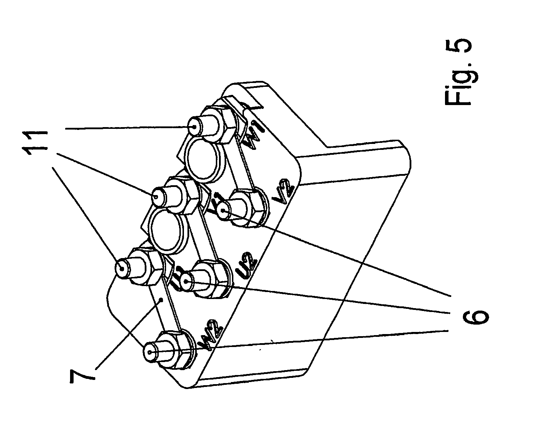

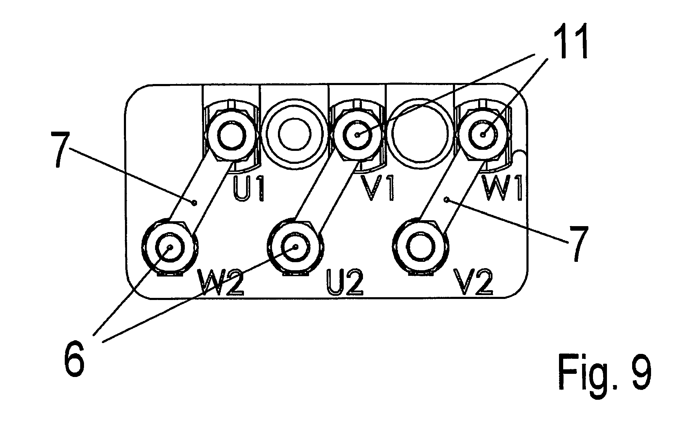

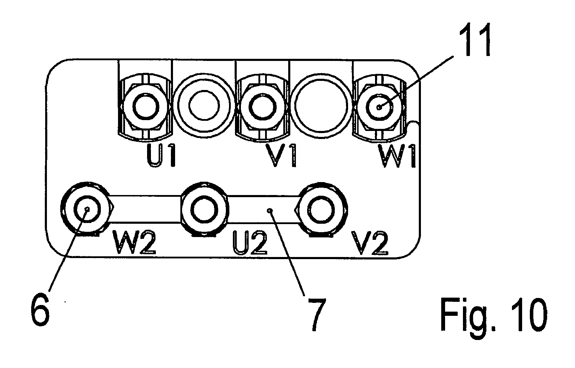

In Figur 5 ist die Klemmenplatte 4 gezeigt, die nicht von der Erfindung umfasst ist, wobei auf die Gewindebolzen 14 der langen Kontakte 11 und kurzen Kontakte 6 Muttern 5 aufgeschraubt sind, die die Klommenbrücken 7 anpressen. Diese Klemmenbrücken sind in Figur 5, wie auch in Figur 9, derart orientiert, dass der Motor in Dreieckschaltung betreibbar ist. Figur 10 zeigt die Orientierung der Klemmenbrücken 7 in Sternschaltung.

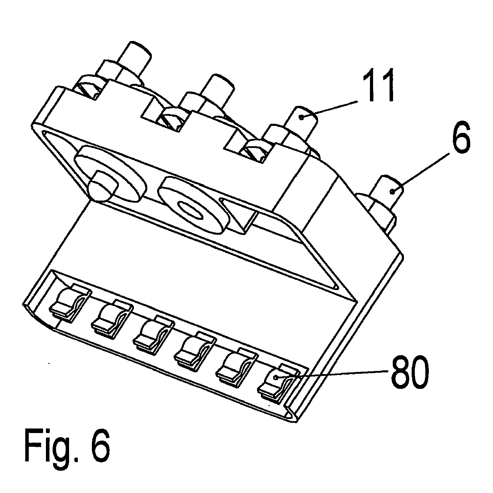

Figur 6 zeigt die Klemmenplatte 4 gemäß Figur 5 in einer Schrägansicht von unten, wobei die Federkontakte 80 der Kontakte (6,11) sichtbar sind.

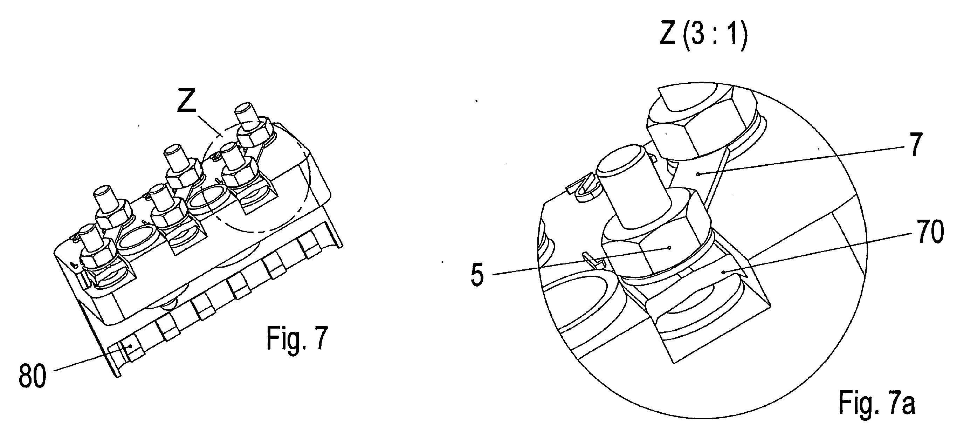

Figur 7 zeigt eine Schrägansicht der Klemmenplatte gemäß Figur 5, wobei ein Ausschnitt in Figur 7a vergrößert gezeigt ist. Dort ist klar zu sehen, dass die Mutter 5 die Klemmenbrücke 7 auf die Anschlussscheibe drückt.

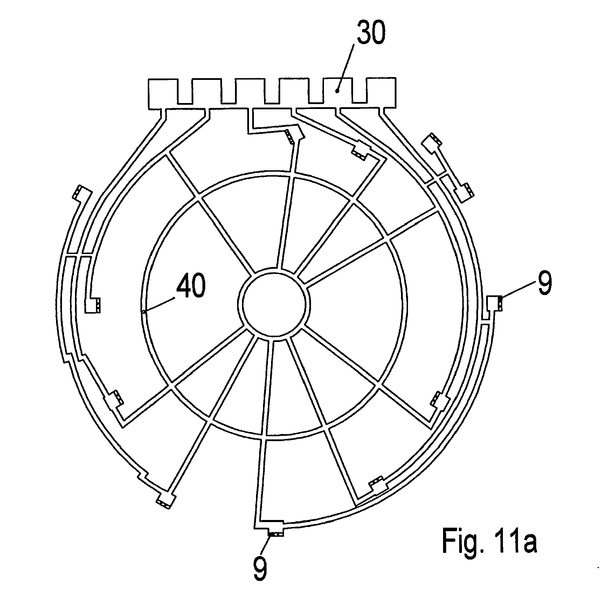

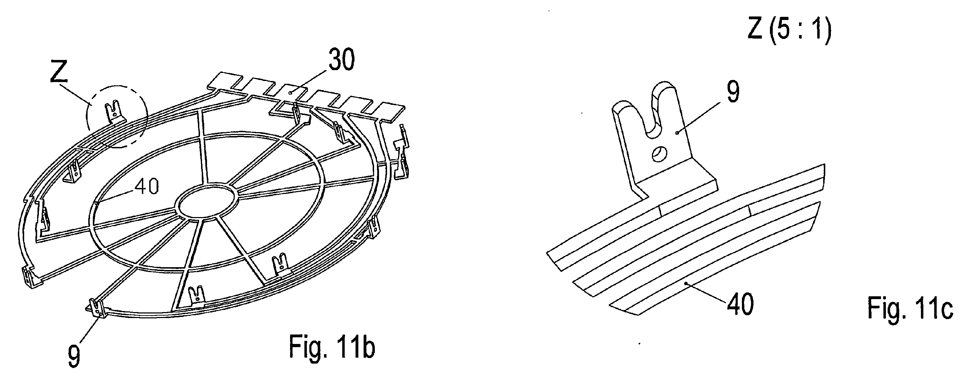

In Figur 11a ist eine Draufsicht auf das Stanz-Biege-Gitter 40 gezeigt, in Figur 11b eine zugehörige isometrische Ansicht und in Figur 11c ein vergrößerter Ausschnitt um einen Schweißhaken 9 für das beschriebene Nebenschlussschweißverfahren herum.

Bei der Ausführung des Elektromotors als zweipoliger oder mehrpoliger Motor sind die Statorwicklungen für verschiedene Phasen gegeneinander mit einem Isoliermaterial elektrisch isoliert. Somit ist der Motor sogar von einem Umrichter versorgbar. Denn dabei treten hohe Spannungsspitzen zwischen den Wicklungen der verschiedenen Phasen auf die ansonsten zu Wicklungsschluss, also einer Art Kurzschluss, führen könnten.

Außerdem werden die Statorwicklungen mit einer Bandage versehen und für die Herstellung zusammengehalten. Die eigentliche Fixierung der Wicklungen erfolgt allerdings mittels des beschriebenen Verbackens.

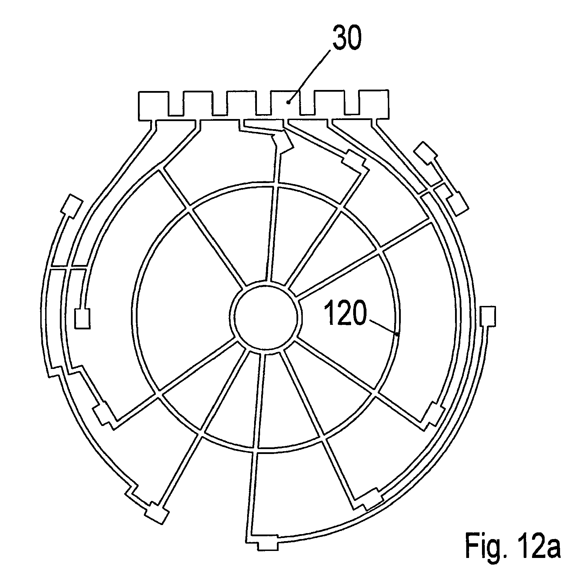

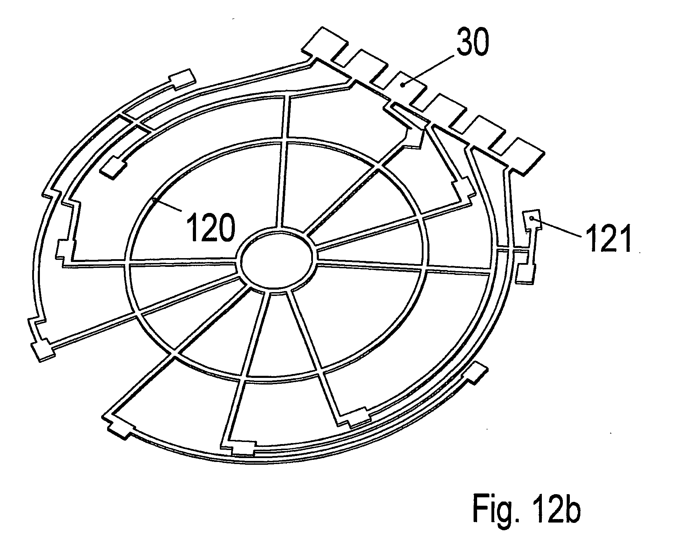

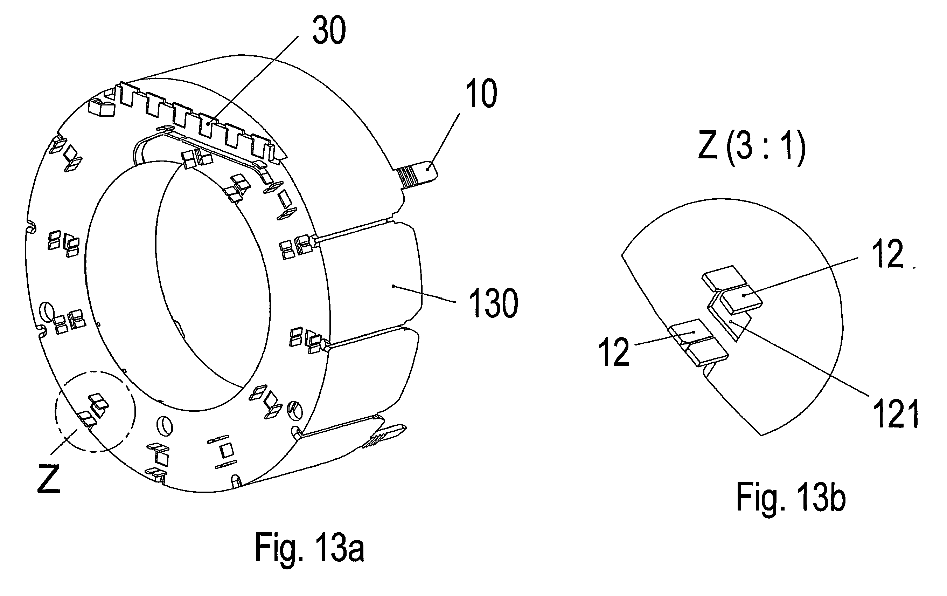

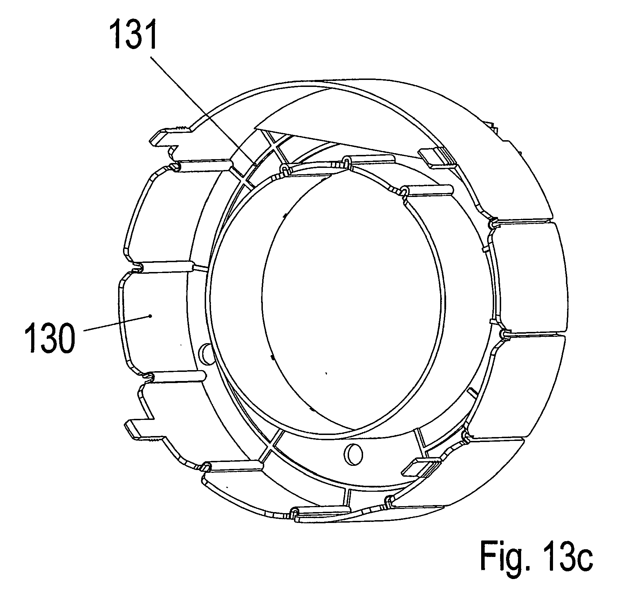

Bei weiteren erfindungsgemäßen Ausführungsbeispielen ist kein Nebenschlussschweißverfahren sondern alternativ ein anderes Schweißverfahren, wie beispielsweise Thermokompressionsverfahren, verwendet. Dazu wird, wie in Figur 12, also der Draufsicht nach Figur 12a und der zugehörigen isometrischen Ansicht nach Figur 12b, gezeigt, ein Stanz-Gitter 120 verwendet, das auch Zungen 30 aufweist. Die Kontaktflächen 121 für die Kontaktierung des Wicklungsdrahtes der Statorwicklungen sind jedoch ohne Schweißhaken sondern als plane Flächen geformt. Somit ist das andere Schweißverfahren, wie beispielsweise Thermokompressionsschweißen, ausführbar. Dazu zeigt Figur 13a eine entsprechende Kappe 130, die nun das Stanz-Gitter 120 umspritzt umfasst. In Figur 13b ist ein vergrößerter Ausschnitt gezeigt, der die in einer Aussparung der Kappe 130 tiefer liegende Kontaktfläche 121 zeigt. Außerdem sind wiederum Halterungen 12 zu sehen, mit denen der Wicklungsdraht über der Kontaktfläche fixierbar ist. Beim beispielhaften Thermokompressionsschweißen wird dann der Wicklungsdraht mit einem Werkzeug auf die Kontaktfläche 121 gedrückt und verschweißt, wobei der Lack und der zum Verbacken vorgesehene Kunststoff zerstört wird.

Sowohl das Stanz-Biege-Gitter 40 nach Figur 11a und 11b als auch das Stanz-Gitter 120 nach Figur 12 a und 12 b wird nach dem Umspritzen zur Bildung der Kappe um die Achse herum konzentrisch und an den Verknüpfungsstellen des Gitters derart ausgestanzt, dass nur die gewünschten Verbindungen zwischen Kontaktbereichen und Zungen vorhanden sind und nicht alle miteinander verbunden sind.

Bei weiteren erfindungsgemäßen Ausführungsbeispielen ist die Halterung 12 als Drahthalter, sind die Kontaktbereiche darstellende Zungen 30 als Kontaktzungen und der Kunststoff des Backlackdrahtes als Polyamid ausgeführt.

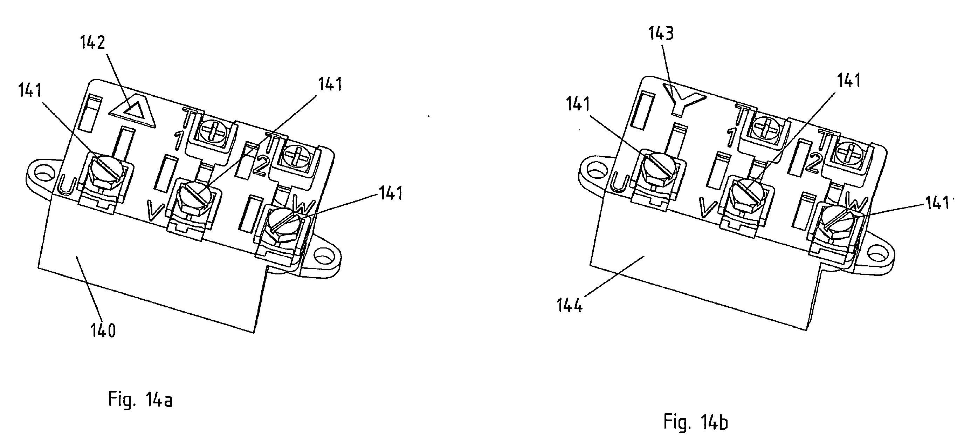

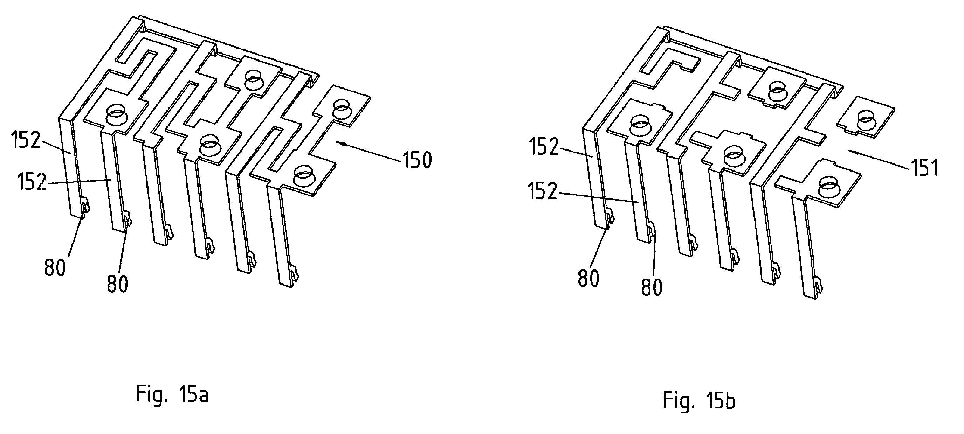

Wie in den Figuren 14a, 14b, 15a, 15b gezeigt, sind erfindungdgemäß die vom Klemmenbrett (140,144) umfassten Kontakte als zweites Gitter herstellbar. Dazu wird wiederum ein Stanz-Biege-Gitter verwendet, das in der in der Figur 15a gezeigten Form verwendet wird und dann mit einem elektrisch gut isolierenden Kunststoff umspritzt wird. Dieses zweite Gitter 150 umfasst die Kontakte 152, die an ihrem zweiten Ende ähnlich ausgebildet sind wie die Kontakte 6, 11, also Federkontakte 80 aufweisen. Das mittels der Umspritzung hergestellte Klemmenbrett wird dann einem StanzProzess unterzogen, der die elektrischen Verbindung in der gewünschten Art bestehen lässt. Das Stanzen wird durch den Kunststoff hindurch ausgeführt. Ergebnis ist dann das Klemmenbrett 144, wie in Figur 14b gezeigt, das nur noch das Gitter 151, wie in Figur 15b gezeigt, umfasst.

Alternativ ist das zweite Gitter und der Stanzprozess derart ausführbar, dass das Klemmenbrett 140 in Dreieckschaltung nach Figur 14a erzeugbar ist.

Das Klemmenbrett weist Klemmenschrauben 141 auf, die zum Verbinden mit Versorgungskabeln dienen. Es sind beispielsweise Ösen von Kabelschuhen anklemmbar und auf diese Weise elektrisch verbindbar.

Das Klemmenbrett weist auch Mittel (142,143) zur Kennzeichnung der Dreleckschaltung oder Sternschaltung auf, also Mittel zur Kennzeichnung der mittels des jeweiligen Klemmenbrettes ermöglichten Betriebsart des Elektromotors.

## Patentansprüche

1. Elektromotor,
umfassend zumindest einen Stator und einen Rotor,
wobei der Stator zumindest ein Statorgehäuse (1), ein Statorblechpaket (15) und Statorwicklungen umfasst,
wobei ein Klemmenbrett (140, 144) vorgesehen ist, auf dem Kontakte (152) umfassende Anschlussvorrichtungen vorgesehen sind,
wobei die Enden der Statorwicklungsdrähte mit einem ersten Stanz-Gitter (120) oder Stanz-Biege-Gitter (40) elektrisch leitend verbunden sind,
wobei zur Herstellung einer elektrischen Verbindung das Klemmenbrett (140, 144) mittels der Kontakte (152) an deren ersten Ende kraftschlüssig und lösbar verbindbar ist mit Kontaktbereichen des ersten Gitters, insbesondere Zungen,
wobei die Kontakte (152) an ihrem zweiten Ende zum Verbinden mit Versorgungsleitungen ausgebildet sind,
wobei das erste Gitter zur Bildung einer Kappe (3, 130) mit Kunststoff umspritzt ist, die mit dem Stator-Blechpaket (15) zur Fixierung lösbar verbunden ist und dort Ihren Halt findet,
**dadurch gekennzeichnet, dass**
das Klemmenbrett (140, 144) die Kontakte (152) umfasst, welche kunststoffumspritzt sind zur Bildung des Klemmenbretts (140, 144), und am zweiten Ende der Kontakte (152) eine jewellige Klemmverbindung (141) vorgesehen ist,
wobei die Kontakte (152) aus einem zweiten Stanz-Biege-Gitter (150, 151) hergestellt sind,
wobei das zweite Gitter (150, 151) derart ausgeführt und umspritzt ist, dass die Betriebsart des Elektromotors, wie Stern-Schaltung oder Dreieckschaltung, festgelegt ist,
wobei das mittels Umspritzung hergestellte Klemmenbrett (140, 144) mit einem Stanzprozess derart gestanzt ist, dass die elektrischen Verbindungen In der gewünschten Art bestehen geblieben sind und das Stanzen durch den Kunststoff hindurch ausgeführt ist.

2. Elektromotor nach Anspruch 1,
**dadurch gekennzeichnet, dass**
der umspritzte Kunststoff an seiner Oberfläche derart ausgeprägt ist, dass Mittel (142, 143) zur Kennzeichnung der Betriebsart umfasst sind, wie ein Symbol, Piktogramm oder dergleichen.

3. Elektromotor nach mindestens einem der vorangegangenen Ansprüche,
**dadurch gekennzeichnet, dass**
das erste Ende der Kontakte (152) innerhalb des Statorgehäuses (1) vorgesehen ist und das zweite Ende der Kontakte (152) außerhalb des Statorgehäuses (1) vorgesehen ist, insbesondere im Klemmenkasten, also Anschlusskasten, oder in der Umgebung.

4. Elektromotor nach mindestens einem der vorangegangenen Ansprüche,
**dadurch gekennzeichnet, dass**
an der Kappe (3, 130) Führungskanäle und Halterungen für die Wicklungsdrähte ausgeformt sind.

5. Elektromotor nach mindestens einem der vorangegangenen Ansprüche,
**dadurch gekennzeichnet, dass**
die Wicklungsdrähte mit Kontaktbereichen des ersten Gitters (120, 40) mittels Thermokompressionsschweißung oder Nebenschlussverschweißung verschweißt sind.

6. Elektromotor nach Anspruch 5,
**dadurch gekennzeichnet, dass**
das erste Gitter (120, 40) derart gestanzt und geformt ist, dass Schweißhaken für die Nebenschlussverschweißung mit den Wicklungsdrähten ausgebildet sind.

7. Elektromotor nach mindestens einem der vorangegangenen Ansprüche,
**dadurch gekennzeichnet, dass**
das Klemmenbrett (140, 144) mittels Aufstecken der Kontakte (152) auf die Kontaktbereiche, insbesondere Zungen, des ersten Gitter (120, 40) elektrisch verbindbar sind.

8. Elektromotor nach mindestens einem der vorangegangenen Ansprüche,
**dadurch gekennzeichnet, dass**
die Kontakte (152) an einem ihrer Ende Federkontakte (80) aufweisen zur Verbindung mit den Kontaktbereichen des ersten Gitters (120, 40).

9. Elektromotor nach mindestens einem der Ansprüche 1 bis 7,
**dadurch gekennzeichnet, dass**
die Kontakte (152) an einem ihrer Enden eine Schneide zur Bildung eines Schneidkontaktes aufweisen zur Verbindung mit den Kontaktbereichen des ersten Gitters (120, 40).

10. Elektromotor nach mindestens einem der vorangegangenen Ansprüche,
**dadurch gekennzeichnet, dass**
die Kappe (3, 130) Verstärkungsrippen (41) im Bereich des ersten Gitters (120, 40) aufweist.

11. Elektromotor nach mindestens einem der vorangegangenen Ansprüche,
**dadurch gekennzeichnet, dass**
**am Umfang der Kappe (3, 130) Rastnasen (10)** unsymmetrisch und/oder ungleichmäßig angeordnet sind.

## Claims

1. An electric motor,
comprising at least a stator and a rotor,
the stator comprising at least a stator housing (1), a laminated stator core (15) and stator windings,
a terminal board (140, 144) being provided on which connection devices which comprise contacts (152) are provided,
the ends of the stator winding wires being connected in electrically conductive manner to a first lead frame (120) or flexible lead frame (40),
wherein, in order to produce an electrical connection, the terminal board (140, 144) can be connected in a force fit and detachably by means of the contacts (152) on the first end thereof to contact regions of the first frame, in particular tongues,
the contacts (152) being formed on their second end for connecting to supply lines,
the first frame, in order to form a cap (3, 130), being encapsulated with plastics material, which cap is detachably connected to the laminated stator core (15) for fixing and finds a hold there,
**characterised in that**
the terminal board (140, 144) comprises the contacts (152), which are plastics-encapsulated to form the terminal board (140, 144), and a respective clamp connection (141) is provided on the second end of the contacts (152),
the contacts (152) being produced from a second flexible lead frame (150, 151),
the second frame (150, 151) being embodied and encapsulated such that the operating mode of the electric motor, such as star connection or delta connection, is established,
the terminal board (140, 144) which is produced by means of encapsulation is cut with a stamping process such that the electrical connections have remained in the desired manner and the stamping is carried out through the plastics material.

2. An electric motor according to Claim 1,
**characterised in that**
the encapsulated plastics material is marked on its surface in such a manner that means (142, 143) for identifying the operating mode are comprised, such as a symbol, pictogram or the like.

3. An electric motor according to at least one of the preceding claims,
**characterised in that**
the first end of the contacts (152) is provided within the stator housing (1), and the second end of the contacts (152) is provided outside the stator housing (1), in particular in the terminal box, i.e. junction box, or in the vicinity.

4. An electric motor according to at least one of the preceding claims,
**characterised in that**
guide ducts and holding means for the winding wires are formed on the cap (3, 13).

5. An electric motor according to at least one of the preceding claims,
**characterised in that**
the winding wires are welded to contact regions of the first frame (120, 40) by means of thermo-compression welding or shunt welding.

6. An electric motor according to Claim 5,
**characterised in that**
the first frame (120, 40) is stamped and formed such that weld hooks for the shunt welding with the winding wires are formed.

7. An electric motor according to at least one of the preceding claims,
**characterised in that**
the terminal board (140, 144) can be electrically connected by means of placing the contacts (152) on the contact regions, in particular tongues, of the first frame (120, 40).

8. An electric motor according to at least one of the preceding claims,
**characterised in that**
the contacts (152) at one of their ends have spring contacts (80) for connecting to the contact regions of the first frame (120, 40).

9. An electric motor according to at least one of Claims 1 to 7,
**characterised in that**
the contacts (152) have at one of their ends a cutting edge for forming a cutting contact for connecting to the contact regions of the first frame (120, 40).

10. An electric motor according to at least one of the preceding claims,
**characterised in that**
the cap (3, 130) has reinforcing ribs (41) in the region of the first frame (120, 40).

11. An electric motor according to at least one of the preceding claims,
**characterised in that**
latch projections (10) are arranged non-symmetrically and/or non-uniformly on the periphery of the cap (3, 130).

## Revendications

1. Moteur électrique, comprenant au moins un stator et un rotor,
sachant que le stator comprend au moins une carcasse de stator (1), un empilage de tôles de stator (15) et des enroulements statoriques,
sachant qu'il est prévu une plaque à bornes (140, 144), sur laquelle sont prévus des dispositifs de raccordement comprenant des contacts (152),
sachant que les extrémités des fils métalliques des enroulements statoriques sont reliées en conduction électrique à une première grille découpée (120) ou découpée et pliée (40), sachant qu'afin de réaliser une liaison électrique, la plaque à bornes (140, 144) peut, au moyen des contacts (152) à leur première extrémité, être reliée à force et de manière amovible à des zones de contact de la première grille, en particulier des languettes,
sachant que les contacts (152) sont conçus, à leur deuxième extrémité, pour la liaison avec des lignes d'alimentation,
sachant que la première grille est enrobée par injection de matière plastique afin de former un capuchon (3, 130), qui est assemblé de manière amovible à l'empilage de tôles de stator (15) pour la fixation en position et y est maintenu,
**caractérisé en ce que** la plaque à bornes (140, 144) comprend les contacts (152), qui sont enrobés par injection de matière plastique afin de former la plaque à bornes (140, 144), et une liaison respective par serrage (141) est prévue à la deuxième extrémité des contacts (152),
sachant que les contacts (152) sont fabriqués à partir d'une deuxième grille découpée et pliée (150, 151),
sachant que la deuxième grille (150, 151) est réalisée et enrobée par injection de telle sorte que le mode de fonctionnement du moteur électrique, tel qu'un montage en étoile ou un montage en triangle, est ainsi défini,
sachant que la plaque à bornes (140, 144) fabriquée par enrobage par injection est, par un processus de découpage, découpée de telle sorte que les liaisons électriques restent présentes de la manière souhaitée et que le découpage est effectué à travers la matière plastique.

2. Moteur électrique selon la revendication 1, **caractérisé en ce que** la matière plastique enrobée par injection est, sur sa surface, estampée de telle sorte qu'elle comprend des moyens (142, 143) pour identifier le mode de fonctionnement, tels qu'un symbole, un pictogramme ou analogues.

3. Moteur électrique selon au moins une des revendications précédentes, **caractérisé en ce que** la première extrémité des contacts (152) est prévue à l'intérieur de la carcasse de stator (1) et la deuxième extrémité des contacts (152) est prévue à l'extérieur de la carcasse de stator (1), en particulier dans la boîte à bornes, donc la boîte de raccordement, ou dans l'environnement.

4. Moteur électrique selon au moins une des revendications précédentes, **caractérisé en ce que** des canaux de guidage et des supports pour les fils métalliques des enroulements sont formés sur le capuchon (3, 130).

5. Moteur électrique selon au moins une des revendications précédentes, **caractérisé en ce que** les fils métalliques des enroulements sont soudés à des zones de contact de la première grille (120, 40) par soudage par thermocompression ou par soudage en dérivation.

6. Moteur électrique selon la revendication 5, **caractérisé en ce que** la première grille (120, 40) est découpée et façonnée de telle sorte que sont formés des crochets de soudage pour le soudage en dérivation avec les fils métalliques des enroulements.

7. Moteur électrique selon au moins une des revendications précédentes, **caractérisé en ce que** la plaque à bornes (140, 144) peut être reliée électriquement par enfichage des contacts (152) sur les zones de contact, en particulier les languettes, de la première grille (120, 40).

8. Moteur électrique selon au moins une des revendications précédentes, **caractérisé en ce que** les contacts (152) présentent à l'une de leurs extrémités des contacts à ressort (80) pour la liaison avec les zones de contact de la première grille (120,40).

9. Moteur électrique selon au moins une des revendications 1 à 7, **caractérisé en ce que** les contacts (152) présentent à l'une de leurs extrémités un tranchant pour former un contact coupant, pour la liaison avec les zones de contact de la première grille (120, 40).

10. Moteur électrique selon au moins une des revendications précédentes, **caractérisé en ce que** le capuchon (3, 130) présente des nervures de renforcement (41) dans la région de la première grille (120, 40).

11. Moteur électrique selon au moins une des revendications précédentes, **caractérisé en ce que** des becs d'encliquetage (10) sont disposés de manière asymétrique et/ou irrégulière sur le pourtour du capuchon (3, 130).
